# EUROPEAN PATENT SPECIFICATION

(11) **EP 4 572 347 B1**
(45) Date of publication and mention of the grant of the patent: **10.06.2026**
(21) Application number: 23926026.8
(22) Date of filing: 17.11.2023
(51) Int. Cl.: B61L 27/20, B61L 21/10, B61L 27/70, B61L 15/00, B61B 1/00, H04W 4/42, H04W 4/48

(54) **VIRTUAL COUPLING RADIO BLOCK CENTER SWITCHING METHOD FOR HEAVY HAUL RAILWAY, DEVICE, AND MEDIUM**
VIRTUELLES KOPPLUNGSFUNKBLOCKZENTRUMSCHALTVERFAHREN FÜR SCHWERLASTEISENBAHN, VORRICHTUNG UND MEDIUM
PROCÉDÉ DE COMMUTATION DE CENTRE DE BLOC RADIO PAR COUPLAGE VIRTUEL POUR CHEMIN DE FER DE TRANSPORT LOURD, DISPOSITIF ET SUPPORT

(30) Priority: 07.03.2023 CN 202310215458
(43) Date of publication of application: 18.06.2025
(73) Proprietor: Casco Signal Ltd., Shanghai 200435 (CN)
(72) Inventor: XIA, Ming, Shanghai 200435 (CN); LIU, Jiao, Shanghai 200435 (CN); HOU, Xiaowei, Shanghai 200435 (CN); LAI, Hao, Shanghai 200435 (CN); CHEN, Jiao, Shanghai 200435 (CN); ZENG, Fanyu, Shanghai 200435 (CN); WANG, Tianhe, Shanghai 200435 (CN)
(74) Representative: Sun, Yiming
(86) International application number: PCT/CN2023/132179
(87) International publication number: WO 2024/183331

(56) References cited:
- CN-A- 107 972 701
- CN-A- 114 599 066
- CN-A- 115 535 037
- CN-A- 115 535 037
- CN-A- 116 437 318
- US-A1- 2022 315 072
- CHEN, YONGMING: "Research on Train Control System of Heavy-haul Railway Based on Virtual Grouping Technology", RAILWAY STANDARD DESIGN, vol. 67, no. 9, 1 September 2023 (2023-09-01), XP093207794

## Description

### FIELD OF TECHNOLOGY

The present invention relates to a train signal control system, in particular to a method, device and medium for switching a virtual marshalling radio block center for a heavy-haul railway.

### BACKGROUND

Virtual marshalling utilizes wireless communication and automatic control technologies to realize information sharing and coordinate control of two or more trains running adjacent to each other, form a logical community to complete train control and scheduling organization, break through a constraint of an existing block system that a front train is in a stationary state, significantly reduce a tracking distance between trains, and shorten a running interval. It has an advantage of adapting to an unbalanced distribution of freight time and space. The document CN115535037A describes an interconnection method and system for a heavy-duty railway virtual marshalling train control system.

A virtual marshalling radio block center (V-RBC) is a key device to control running of a marshalled train. By controlling each train in the virtual marshalled train to follow a front train closely, stable and cooperative running of the virtual marshalled train is realized, and the aim of safe and efficient running of a train group is finally achieved.

When the heavy-haul line has a large number of jurisdiction stations, it is necessary to set up a plurality of radio block centers for segmented management. Therefore, how to ensure the efficiency of train passage and ensure that the virtual marshalled train can pass through at a high speed has become a technical problem to be solved.

### SUMMARY

The present invention aims to overcome the defects of the prior art and provide a method, device and medium for switching a virtual marshalling radio block center for a heavy-haul railway, so as to ensure that a marshalled train and a non-marshalled train can transfer authority efficiently, shorten a running interval and improve a line transportation capacity.

The purpose of the present invention can be realized by the following technical schemes:
According to a first aspect of the present invention, provided is a method for switching a virtual marshalling radio block center for a heavy-haul railway, wherein the method designs two modes of virtual marshalling radio block center V-RBC-led authority transfer and on-board-led authority transfer for a non-marshalled train and a marshalled train respectively, and the switching method comprises:
1) the non-marshalled train transfers a monitoring right of the non-marshalled train from a V-RBC to an adjacent V-RBC under the V-RBC-led authority transfer mode;
2) the marshalled train and the non-marshalled train transfer the monitoring right of the non-marshalled train from a V-RBC to an adjacent V-RBC under the on-board-led authority transfer mode; and
3) the marshalled train transfers the monitoring right of the non-marshalled train from a V-RBC to an adjacent V-RBC under the V-RBC-led authority transfer mode.

As a preferred technical scheme, the V-RBC-led authority transfer mode is adopted in a long transfer interval with a good communication quality; and the on-board-led authority transfer mode is adopted in a short transfer interval with unstable communication.

As a preferred technical scheme, in the V-RBC-led authority transfer mode, registration of a train and calculation of movement authority are independently managed in a transferring V-RBC and a receiving V-RBC with an execution balise as a boundary.

As a preferred technical scheme, in the on-board-led authority transfer mode, a train establishes communication with both V-RBCs to separately manage marshalling and authority.

As a preferred technical scheme, the process that 1) the non-marshalled train transfers a monitoring right of the non-marshalled train from a V-RBC to an adjacent V-RBC under the V-RBC-led authority transfer mode specifically comprises:
step S101: when movement authority of a communication train extends to a jurisdiction range of a receiving V-RBC, a transferring V-RBC integrates information within the jurisdiction range of the receiving V-RBC in movement authority of a transferring train, and integrated information is transmitted to the train;
step S102: when the transferring V-RBC determines that a location reported by the train is at a location of a pre-notice balise, and the movement authority of the train has crossed a transferring boundary, a distance and an IP address of the receiving V-RBC are transmitted to the train;
step S103: communication is established with the receiving V-RBC, and the train registers with the receiving V-RBC, and transmits parameter information;
step S104: the train runs into the receiving V-RBC, a maximum safety front end of the train leaves the transferring V-RBC, the transferring V-RBC transmits a notification message to the receiving V-RBC, and the receiving V-RBC transmits a take-over message to the transferring V-RBC; and
step S105: a conversation with a previous V-RBC is ended, and a communication session with the transferring V-RBC is ended after a minimum safe rear end of the train leaves the transferring V-RBC.

As a preferred technical scheme, the information within the jurisdiction range of the receiving V-RBC in step S101 comprises a route condition, a track condition and a temporary speed restriction.

As a preferred technical scheme, the process that 2) the marshalled train and the non-marshalled train transfer a monitoring right of the non-marshalled train from a V-RBC to an adjacent V-RBC under the on-board-led authority transfer mode specifically comprises:
step S201: communication is established with the receiving V-RBC, and communication with the receiving V-RBC is established after a fully monitored train runs into a co-management interval;
step S202: movement authority extends to a receiving party; the transferring V-RBC integrates interval train information, hidden train information and marshalling information transmitted by the receiving V-RBC, and calculates extension of the movement authority for the train from a transferring party to the receiving party, reaching up to a home signal ahead where communication with the receiving V-RBC is established; and after the fully monitored train runs into the co-management interval, the communication with the receiving V-RBC is established;
step S203: the receiving V-RBC takes over, and after the train runs into the receiving party, the transferring V-RBC stops calculating the movement authority for the train, which is calculated separately by the receiving party and extends cross the home signal ahead; and
step S204: the communication with the transferring V-RBC is disconnected; and after the train runs into the receiving party, in order to facilitate the transferring party calculating the movement authority for a subsequent train, the communication with the transferring party is not disconnected temporarily and is then disconnected after the train runs into the station.

As a preferred technical scheme, the process that 3) the marshalled train transfers a monitoring right of the non-marshalled train from a V-RBC to an adjacent V-RBC under the V-RBC-led authority transfer mode is specifically as follows:
step S301: when an endpoint of the movement authority of the marshalled train reaches a V-RBC switching boundary, the transferring V-RBC transmits transferring train pre-notice information to the receiving V-RBC and applies for route information; when the transferring V-RBC obtains the route information provided by the receiving V-RBC, the transferring V-RBC transmits the movement authority extending to a receiving V-RBC area to the marshalled train;
step S2: when the marshalled train runs close to the V-RBC switching boundary, the transferring V-RBC transmits a V-RBC switching command to the virtual marshalled train; and if an on-board communication radio is normal, a communication connection is established with the receiving V-RBC;
step S3: when a maximum safety front end of a tail vehicle of the marshalled train crosses a V-RBC switching point, the receiving V-RBC transmits train takeover information to the transferring V-RBC; and if the virtual marshalled train is properly connected to both the transferring V-RBC and the receiving V-RBC, only the movement authority information of the receiving V-RBC is used; and
step S4: when a minimum safety rear end of the tail vehicle of the marshalled train crosses a V-RBC switching balise group, the communication connection between on-board device and the transferring V-RBC is terminated; and if the on-board device is only connected to the transferring V-RBC before transfer, the on-board device restarts the connection with the receiving V-RBC, and complete the train registration and apply for the movement authority.

According to a second aspect of the present invention, provided is an electronic device, comprising a processor and a memory on which a computer program is stored, wherein the processor, when executing the program, implements the above-mentioned method.

According to third aspect of the present invention, provided is a computer-readable storage medium on which a computer program is stored, wherein the program, when executed by a processor, implements the above-mentioned method.

Compared with the prior art, the present invention has the following advantages:
1) The present invention provides a flexible marshalling that adapts to different train types at the same time to improve operation efficiency and flexibility of operation organization. It ensures the efficient authority transfer of the marshalled train and the non-marshalled train, shortening the running interval, and improving the route transportation capacity.
2) Under the scenario of applying the virtual marshalling technology on the heavy-haul railway, the present invention designs two modes of the V-RBC-led authority transfer and the train-led authority transfer for the non-marshalled train and the marshalled train respectively, which can not only meet the transfer of the marshalled train, but also adapt to switch of a control right of the non-marshalled train, and can be selected according to needs of an actual project. For example, the V-RBC-led authority transfer mode may be adopted in a long transfer interval with a good communication quality; and the on-board-led authority transfer mode may be adopted in a short transfer interval with unstable communication.
3) The V-RBC-led authority transfer method of the present invention has a clear space boundary between the transferring V-RBC and the receiving V-RBC, and has a clear interactive process. Registration of the train and calculation of movement authority are independently managed in the transferring V-RBC and the receiving V-RBC with the execution balise as the boundary, cross interference is less, and the method can adapt to a switching process of a train with a single radio station.
4) In the on-board-led authority transfer method of the present invention, the train establishes communication with both V-RBCs to separately manage marshalling and authority without a need of splicing authority. When communication of a departing train fails and recovers, the switching process may be resumed at the same time to ensure the switching efficiency of the train. At the same time, information exchange between the V-RBCs is relatively simple, which greatly reduces a probability of an error. Moreover, there is little difference between the non-marshalled train and the marshalled train, and adaptability is better.

### BRIEF DESCRIPTION OF THE DRAWINGS

FIG. 1 is a schematic diagram of a process of non-marshalled V-RBC-led authority transfer of the present invention;
FIG. 2 is a schematic diagram of a process of non-marshalled train-led authority transfer of the present invention;
FIG. 3 is a schematic diagram of a process of marshalled train V-RBC-led authority transfer of the present invention; and
FIG. 4 is a schematic diagram of a process of a marshalled train V-RBC-led authority transfer of the present invention.

### DESCRIPTION OF THE EMBODIMENTS

The following is a clear and complete description of technical schemes in embodiments of the present invention in combination with drawings attached to the embodiments of the present invention. Obviously, the embodiments described is a part of the embodiments of the present invention, but not the whole embodiments. Based on the embodiments of the present invention, all other embodiments obtained by an ordinary skilled person in the art without creative labor shall fall within a protection scope of the present invention.

The present invention designs two modes of V-RBC-led authority transfer and train-led authority transfer for a non-marshalled train and a marshalled train respectively, which solves a problem that a V-RBC needs to adapt to switch of a control right of the non-marshalled train in addition to meeting the transfer of the marshalled train. Advantages and disadvantages of the two manners are compared to adapt to needs of different scenarios.

The present invention does not need to add an additional device, and can be realized by relying on a software algorithm, reducing a device investment and a system cost.

The method of the present invention comprises:
1) the non-marshalled train transfers a monitoring right of the non-marshalled train from a V-RBC to an adjacent V-RBC under the V-RBC-led authority transfer mode;
2) the marshalled train and the non-marshalled train transfer the monitoring right of the non-marshalled train from a V-RBC to an adjacent V-RBC under the on-board-led authority transfer mode; and
3) the marshalled train transfers the monitoring right of the non-marshalled train from a V-RBC to an adjacent V-RBC under the V-RBC-led authority transfer mode.

When the non-marshalled train transfers a monitoring right of the non-marshalled train from a V-RBC to an adjacent V-RBC under the V-RBC-led authority transfer mode, the following steps are executed.

Step S101: when movement authority of a communication train extends to a jurisdiction range of a receiving V-RBC, a transferring V-RBC integrates information, such as a route condition, a track condition and a temporary speed restriction, within the jurisdiction range of the receiving V-RBC in movement authority of a transferring train, and integrated information is transmitted to the train.

Step S102: when the transferring V-RBC determines that a location reported by the train is at a location of a pre-notice balise, and the movement authority of the train has crossed a transferring boundary, a distance and an IP address of the receiving V-RBC are transmitted to the train.

Step S103: communication is established with the receiving V-RBC. The train registers with the receiving V-RBC. and transmits parameter information.

Step S104: the train runs into the receiving V-RBC. A maximum safety front end of the train leaves the transferring V-RBC (running into the receiving V-RBC), the transferring V-RBC transmits a notification message to the receiving V-RBC, and the receiving V-RBC transmits a take-over message to the transferring V-RBC.

Step S105: a conversation with a previous V-RBC is ended. A communication session with the transferring V-RBC is ended after a minimum safe rear end of the train leaves the transferring V-RBC.

When the marshalled train and the non-marshalled train transfer the monitoring right of the non-marshalled train from a V-RBC to an adjacent V-RBC under the on-board-led authority transfer mode, the following steps are executed.

Step S201: communication is established with the receiving V-RBC. Communication with the receiving V-RBC is established after a fully monitored train runs into a co-management interval.

Step S202: movement authority extends to a receiving party. The transferring V-RBC integrates interval train information, hidden train information and marshalling information transmitted by the receiving V-RBC, and calculates extension of the movement authority for the train from a transferring party to the receiving party, reaching up to a home signal ahead where communication with the receiving V-RBC is established. The communication with the receiving V-RBC is established after the fully monitored train runs into the co-management interval.

Step S203: the receiving V-RBC takes over. After the train runs into the receiving party, the transferring V-RBC stops calculating the movement authority for the train, which is calculated separately by the receiving party and may extend cross the home signal ahead.

Step S204: the communication with the transferring V-RBC is disconnected. After the train runs into the receiving party, in order to facilitate the transferring party calculating the movement authority for a subsequent train, the communication with the transferring party is not disconnected temporarily and is then disconnected after the train runs into the station.

When the marshalled train transfers the monitoring right of the non-marshalled train from a V-RBC to an adjacent V-RBC under the V-RBC-led authority transfer mode, the following steps are executed.

Step S301: when an endpoint of the movement authority of the marshalled train reaches a V-RBC switching boundary, the transferring V-RBC transmits transferring train pre-notice information to the receiving V-RBC and applies for route information. When the transferring V-RBC obtains the route information provided by the receiving V-RBC, the transferring V-RBC transmits the movement authority extending to a receiving V-RBC area to the marshalled train.

Step S302: when the marshalled train runs close to the V-RBC switching boundary, the transferring V-RBC transmits a V-RBC switching command to the virtual marshalled train. If an on-board communication radio is normal, a communication connection is established with the receiving V-RBC.

Step S303: when a maximum safety front end of a tail vehicle of the marshalled train crosses a V-RBC switching point, the receiving V-RBC transmits train takeover information to the transferring V-RBC. If the virtual marshalled train is properly connected to both the transferring V-RBC and the receiving V-RBC, only the movement authority information of the receiving V-RBC is used.

Step S304: when a minimum safety rear end of the tail vehicle of the marshalled train crosses a V-RBC switching balise group, the communication connection between on-board device and the transferring V-RBC is terminated. If the on-board device is only connected to the transferring V-RBC before transfer, the on-board device restarts the connection with the receiving V-RBC, and complete the train registration and apply for the movement authority.

### Specific examples

The present invention is implemented under different scenarios of applying the virtual marshalling technology on the heavy-haul railway, and designs two modes of the V-RBC-led authority transfer and the train-led authority transfer for an authority transfer process of the non-marshalled train and the marshalled train respectively, so as to adapt to needs of different scenarios.

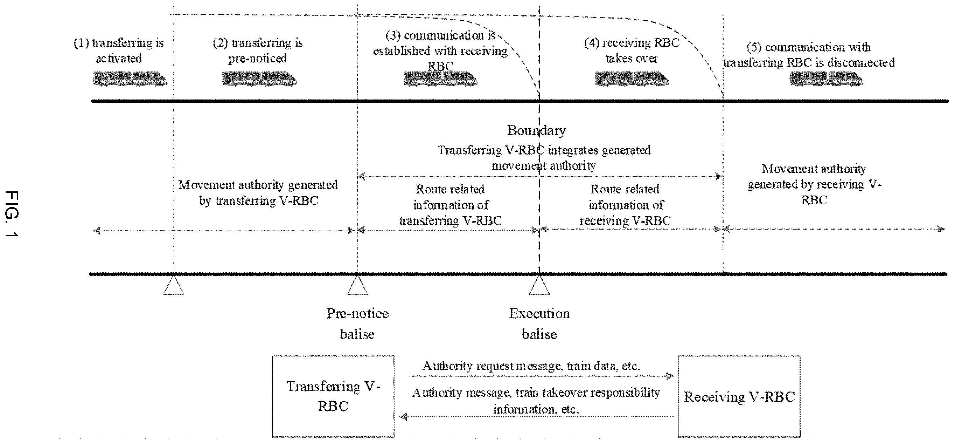

### 1. The non-marshalled train V-RBC-led authority transfer is as shown in FIG. 1.

There is a train A in a jurisdiction interval of the transferring V-RBC, movement authority of the train A extends to a jurisdiction range of the receiving V-RBC, a transferring process is activated, the transferring V-RBC integrates information, such as a route condition, a track condition and a temporary speed restriction, within the jurisdiction range of the receiving V-RBC in movement authority of a transferring train, and the integrated information is transmitted to the train A.

When the transferring V-RBC determines that a location reported by the train is at a location of a pre-notice balise, and the movement authority of the train A has crossed a transferring execution balise, the transferring V-RBC transmits a distance and an IP address of the receiving V-RBC to the train A.

The train A registers with the receiving V-RBC, and communication is established with the receiving V-RBC.

A maximum safety front end of the train A leaves the transferring V-RBC (running into the receiving V-RBC), the transferring V-RBC transmits a notification message to the receiving V-RBC, and the receiving V-RBC transmits a take-over message to the transferring V-RBC.

A communication session with the transferring V-RBC is ended after a minimum safe rear end of the train A leaves the transferring V-RBC.

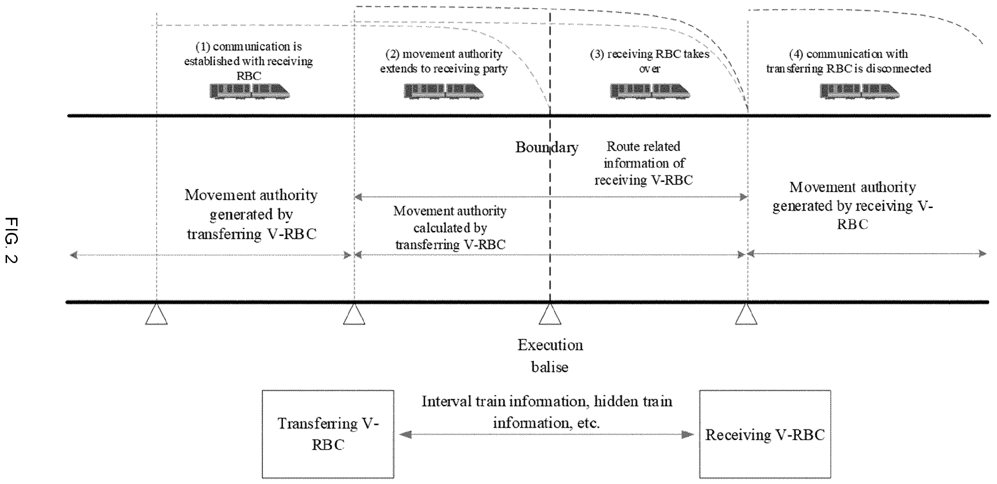

### 2. The non-marshalled train on-board-led authority transfer is as shown in FIG. 2.

The communication with the receiving V-RBC is established after the fully monitored train A runs into the co-management interval of the transferring V-RBC and the receiving V-RBC.

The transferring V-RBC integrates interval train information, hidden train information and marshalling information transmitted by the receiving V-RBC, and calculates extension of the movement authority for the train A from a transferring party to the receiving party, reaching up to a home signal ahead where communication with the receiving V-RBC is established.

After the train A runs into the receiving V-RBC, the transferring V-RBC may stop calculating the movement authority for the train, which is calculated separately by the receiving V-RBC and extends cross the home signal ahead.

After the train A runs into the receiving V-RBC, in order to facilitate the transferring party calculating the movement authority for a subsequent train, the communication with the transferring party is not disconnected temporarily and is then disconnected after the train A runs into the station.

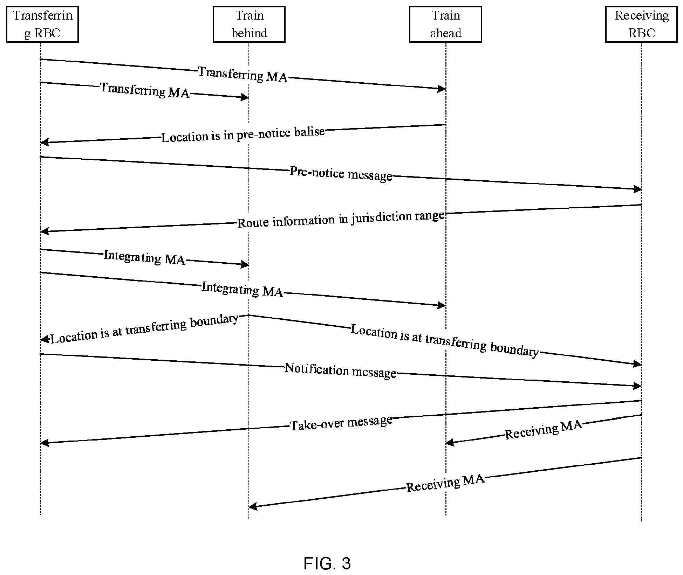

### 3. The marshalled train V-RBC-led authority transfer is as shown in FIG. 3.

When an endpoint of the movement authority of the marshalled train reaches a V-RBC switching boundary, the transferring V-RBC transmits transferring train pre-notice information to the receiving V-RBC and applies for route information. When the transferring V-RBC obtains the route information provided by the receiving V-RBC, the transferring V-RBC transmits the movement authority extending to a receiving V-RBC area to the marshalled train A.

When the marshalled train runs close to the V-RBC switching boundary, the transferring V-RBC transmits a V-RBC switching command to the virtual marshalled train. If an on-board communication radio is normal, a communication connection is established with the receiving V-RBC.

When a maximum safety front end of a tail vehicle of the marshalled train crosses a V-RBC switching point, the receiving V-RBC transmits train takeover information to the transferring V-RBC. If the virtual marshalled train is properly connected to both the transferring V-RBC and the receiving V-RBC, only the movement authority information of the receiving V-RBC is used.

When a minimum safety rear end of the tail vehicle of the marshalled train crosses a V-RBC switching balise group, the communication connection between on-board device and the transferring V-RBC is terminated. If the on-board device is only connected to the transferring V-RBC before transfer, the on-board device restarts the connection with the receiving V-RBC, and complete the train registration and apply for the movement authority.

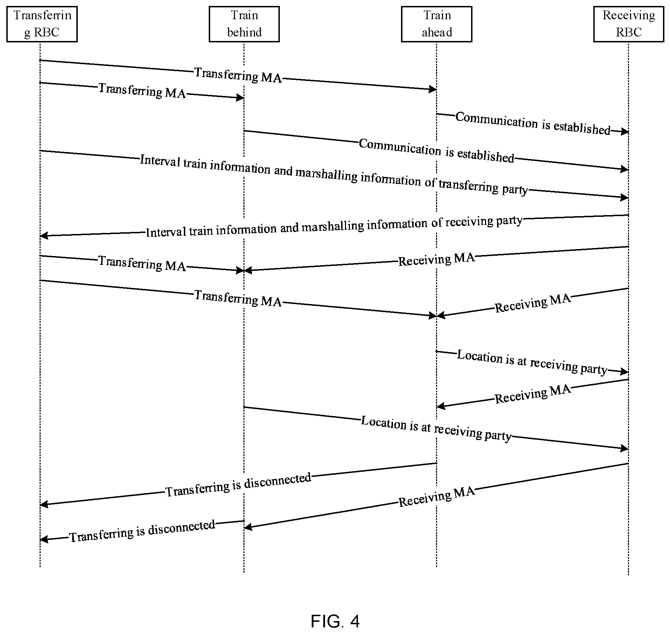

### 4. The marshalled train on-board-led authority transfer method is as shown in FIG. 4.

After the marshalled train A enters the co-management area, the receiving V-RBC is called and the communication is established. Through interaction of the train information and the hidden train information within the jurisdiction range, the V-RBC calculates the movement authority for the marshalled train A at the same time, and transmits it to the on-board device, which is selected by the on-board to use according to a train location. The movement authority of the transferring party in the co-management area extends only to the home signal ahead.

When a minimum safety rear end of the marshalled train A crosses a V-RBC switching balise group, the transferring party no longer transmits the movement authority to the train. The receiving V-RBC may extend the movement authority according to a state of the road ahead.

The above is an introduction to embodiments of the method, and the schemes of the present invention are further explained by embodiments of an electronic device and a storage medium.

The electronic device of the present invention comprises a central processing unit (CPU) that can perform various appropriate actions and processes according to computer program instructions stored in a read-only memory (ROM) or loaded from a storage unit into a random access memory (RAM). In the RAM, various programs and data required for an operation of the device can also be stored. The CPU, ROM, and RAM are connected to each other via a bus. An input/output (I/O) interface is also connected to the bus.

A plurality of components in the device are connected to the I/O interface, comprising: input units, such as a keyboard and a mouse; output units, such as various types of displays and speakers; storage units, such as a disk and an optical disc; and communication units, such as a network card, a modem and a wireless communication transceiver. The communication unit allows the device to exchange information/data with other devices through a computer network such as the Internet and/or various telecommunications networks.

The processing unit performs each of the methods and processes described above, such as the methods of the present invention. For example, in some embodiments, the methods of the present invention may be realized as a computer software program that is physically contained in a machine-readable medium, such as a storage unit. In some embodiments, parts or all of the computer program may be loaded and/or installed on the device via the ROM and/or the communication unit. When the computer program is loaded into the RAM and executed by the CPU, one or more steps of the above-mentioned methods of the present invention can be performed. Alternatively, in other embodiments, the CPU may be configured to execute the methods of the present invention by any other appropriate manner (e.g., with the help of a firmware).

The functions described above herein can be performed, at least in part, by one or more hardware logical components. For example, without limitation, demonstration types of hardware logic components that can be used comprise: a field programmable gate array (FPGA), an application-specific integrated circuit (ASIC), an application-specific standard product (ASSP), a system-on-chip (SOC), a complex programmable logic device (CPLD), and so on.

The program codes for implementing the method of the present invention may be written in any combination of one or more pieces of programming language. These program codes may be provided to a processor or controller of a general-purpose computer, a special-purpose computer or another programmable data processing device so that the program codes, when executed by the processor or controller, implements the functions/operations specified in the flow chart and/or block diagram. The program codes can be executed entirely on a machine, partially on a machine, partially on a machine and partially on a remote machine or completely on a remote machine or server as a stand-alone software package.

In the context of the present invention, the machine readable medium may be a tangible medium that may contain or store a program for use by or in conjunction with an instruction executing system, apparatus or device. The machine readable medium may be a machine readable signal medium or a machine readable storage medium. The machine readable medium may comprise, but is not limited to, an electronic, magnetic, optical, electromagnetic, infrared, or semiconductor system, apparatus, or device, or any suitable combination of the above. More specific examples of the machine readable storage medium would comprise an electrical connection based on one or more wires, a portable computer disk, a hard disk, a random access memory (RAM), a read-only memory (ROM), an erasable programmable ROM (EPROM or flash memory), an optical fiber, a convenient compact disk ROM (CD-ROM), an optical storage device, a magnetic storage device, or any suitable combination of the above. The above are only specific embodiments of the present invention, but the protection scope of the present invention is not limited to this, and any technical person familiar with the technical field can easily think of various equivalent modifications or replacements within the technical scope disclosed by the present invention, as defined by the scope of the claims.

## Claims

1. A method for switching a virtual marshalling radio block center for a heavy-haul railway, wherein the method designs two modes of virtual marshalling radio block center V-RBC-led authority transfer and on-board-led authority transfer for a non-marshalled train and a marshalled train respectively, and the switching method comprises:
1) the non-marshalled train transfers a monitoring right of the non-marshalled train from a V-RBC to an adjacent V-RBC under the V-RBC-led authority transfer mode;
2) the marshalled train and the non-marshalled train transfer the monitoring right of the non-marshalled train from a V-RBC to an adjacent V-RBC under the on-board-led authority transfer mode; and
3) the marshalled train transfers the monitoring right of the non-marshalled train from a V-RBC to an adjacent V-RBC under the V-RBC-led authority transfer mode.

2. The method for switching a virtual marshalling radio block center for a heavy-haul railway according to claim 1, wherein the V-RBC-led authority transfer mode is adopted in a long transfer interval with a good communication quality; and the on-board-led authority transfer mode is adopted in a short transfer interval with unstable communication.

3. The method for switching a virtual marshalling radio block center for a heavy-haul railway according to claim 1, wherein in the V-RBC-led authority transfer mode, registration of a train and calculation of movement authority are independently managed in a transferring V-RBC and a receiving V-RBC with an execution balise as a boundary.

4. The method for switching a virtual marshalling radio block center for a heavy-haul railway according to claim 1, wherein in the on-board-led authority transfer mode, a train establishes communication with both V-RBCs to separately manage marshalling and authority.

5. The method for switching a virtual marshalling radio block center for a heavy-haul railway according to claim 1, wherein the process that 1) the non-marshalled train transfers a monitoring right of the non-marshalled train from a V-RBC to an adjacent V-RBC under the V-RBC-led authority transfer mode specifically comprises:
step S101: when movement authority of a communication train extends to a jurisdiction range of a receiving V-RBC, a transferring V-RBC integrates information within the jurisdiction range of the receiving V-RBC in movement authority of a transferring train, and integrated information is transmitted to the train;
step S102: when the transferring V-RBC determines that a location reported by the train is at a location of a pre-notice balise, and the movement authority of the train has crossed a transferring boundary, a distance and an IP address of the receiving V-RBC are transmitted to the train;
step S103: communication is established with the receiving V-RBC, and the train registers with the receiving V-RBC, and transmits parameter information;
step S104: the train runs into the receiving V-RBC, a maximum safety front end of the train leaves the transferring V-RBC, the transferring V-RBC transmits a notification message to the receiving V-RBC, and the receiving V-RBC transmits a take-over message to the transferring V-RBC; and
step S105: a conversation with a previous V-RBC is ended, and a communication session with the transferring V-RBC is ended after a minimum safe rear end of the train leaves the transferring V-RBC.

6. The method for switching a virtual marshalling radio block center for a heavy-haul railway according to claim 5, wherein the information within the jurisdiction range of the receiving V-RBC in step S101 comprises a route condition, a track condition and a temporary speed restriction.

7. The method for switching a virtual marshalling radio block center for a heavy-haul railway according to claim 1, wherein the process that 2) the marshalled train and the non-marshalled train transfer the monitoring right of the non-marshalled train from a V-RBC to an adjacent V-RBC under the on-board-led authority transfer mode specifically comprises:
step S201: communication is established with the receiving V-RBC, and communication with the receiving V-RBC is established after a fully monitored train runs into a co-management interval;
step S202: movement authority extends to a receiving party; the transferring V-RBC integrates interval train information, hidden train information and marshalling information transmitted by the receiving V-RBC, and calculates extension of the movement authority for the train from a transferring party to the receiving party, reaching up to a home signal ahead where communication with the receiving V-RBC is established; and after the fully monitored train runs into the co-management interval, the communication with the receiving V-RBC is established;
step S203: the receiving V-RBC takes over, and after the train runs into the receiving party, the transferring V-RBC stops calculating the movement authority for the train, which is calculated separately by the receiving party and extends cross the home signal ahead; and
step S204: the communication with the transferring V-RBC is disconnected; and after the train runs into the receiving party, in order to facilitate the transferring party calculating the movement authority for a subsequent train, the communication with the transferring party is not disconnected temporarily and is then disconnected after the train runs into the station.

8. The method for switching a virtual marshalling radio block center for a heavy-haul railway according to claim 1, wherein the process that 3) the marshalled train transfers the monitoring right of the non-marshalled train from a V-RBC to an adjacent V-RBC under the V-RBC-led authority transfer mode is specifically:
step S301: when an endpoint of the movement authority of the marshalled train reaches a V-RBC switching boundary, the transferring V-RBC transmits transferring train pre-notice information to the receiving V-RBC and applies for route information; when the transferring V-RBC obtains the route information provided by the receiving V-RBC, the transferring V-RBC transmits the movement authority extending to a receiving V-RBC area to the marshalled train;
step S2: when the marshalled train runs close to the V-RBC switching boundary, the transferring V-RBC transmits a V-RBC switching command to the virtual marshalled train; and if an on-board communication radio is normal, a communication connection is established with the receiving V-RBC;
step S3: when a maximum safety front end of a tail vehicle of the marshalled train crosses a V-RBC switching point, the receiving V-RBC transmits train takeover information to the transferring V-RBC; and if the virtual marshalled train is properly connected to both the transferring V-RBC and the receiving V-RBC, only the movement authority information of the receiving V-RBC is used; and
step S4: when a minimum safety rear end of the tail vehicle of the marshalled train crosses a V-RBC switching balise group, the communication connection between on-board device and the transferring V-RBC is terminated; and if the on-board device is only connected to the transferring V-RBC before transfer, the on-board device restarts the connection with the receiving V-RBC, and complete the train registration and apply for the movement authority.

9. An electronic device, comprising a processor and a memory on which a computer program is stored, wherein the processor, when executing the program, implements the method according to any one of claims 1 to 8.

10. A computer-readable storage medium on which a computer program is stored, wherein the program, when executed by a processor, implements the method according to any one of claims 1 to 8.

## Patentansprüche

1. Verfahren zum Umschalten eines virtuellen Zugbildungs-Radio-Block-Centers für eine Schwerlastbahn, wobei das Verfahren zwei Modi einer V-RBC-geführten Berechtigungsübertragung durch ein virtuelles Zugbildungs-Radio-Block-Center und einer fahrzeugseitig geführten Berechtigungsübertragung für einen nicht gebildeten Zug beziehungsweise einen gebildeten Zug auslegt, und das Umschaltverfahren umfasst:
1) der nicht gebildete Zug überträgt ein Überwachungsrecht des nicht gebildeten Zugs von einem V-RBC auf ein benachbartes V-RBC in dem V-RBC-geführten Berechtigungsübertragungsmodus;
2) der gebildete Zug und der nicht gebildete Zug übertragen das Überwachungsrecht des nicht gebildeten Zugs von einem V-RBC auf ein benachbartes V-RBC in dem fahrzeugseitig geführten Berechtigungsübertragungsmodus; und
3) der gebildete Zug überträgt das Überwachungsrecht des nicht gebildeten Zugs von einem V-RBC auf ein benachbartes V-RBC in dem V-RBC-geführten Berechtigungsübertragungsmodus.

2. Verfahren zum Umschalten eines virtuellen Zugbildungs-Radio-Block-Centers für eine Schwerlastbahn nach Anspruch 1, wobei der V-RBC-geführte Berechtigungsübertragungsmodus in einem langen Übertragungsintervall mit guter Kommunikationsqualität eingesetzt wird; und der fahrzeugseitig geführte Berechtigungsübertragungsmodus in einem kurzen Übertragungsintervall mit instabiler Kommunikation eingesetzt wird.

3. Verfahren zum Umschalten eines virtuellen Zugbildungs-Radio-Block-Centers für eine Schwerlastbahn nach Anspruch 1, wobei in dem V-RBC-geführten Berechtigungsübertragungsmodus die Registrierung eines Zugs und die Berechnung einer Fahrterlaubnis in einem übergebenden V-RBC und einem empfangenden V-RBC mit einer Ausführungsbalise als Grenze unabhängig verwaltet werden.

4. Verfahren zum Umschalten eines virtuellen Zugbildungs-Radio-Block-Centers für eine Schwerlastbahn nach Anspruch 1, wobei in dem fahrzeugseitig geführten Berechtigungsübertragungsmodus ein Zug Kommunikation mit beiden V-RBCs aufbaut, um Zugbildung und Berechtigung getrennt zu verwalten.

5. Verfahren zum Umschalten eines virtuellen Zugbildungs-Radio-Block-Centers für eine Schwerlastbahn nach Anspruch 1, wobei der Prozess, dass 1) der nicht gebildete Zug ein Überwachungsrecht des nicht gebildeten Zugs von einem V-RBC auf ein benachbartes V-RBC in dem V-RBC-geführten Berechtigungsübertragungsmodus überträgt, im Einzelnen umfasst:
Schritt S101: wenn eine Fahrterlaubnis eines Kommunikationszugs sich bis zu einem Zuständigkeitsbereich eines empfangenden V-RBC erstreckt, integriert ein übergebendes V-RBC Informationen innerhalb des Zuständigkeitsbereichs des empfangenden V-RBC in die Fahrterlaubnis eines übergebenden Zugs, und die integrierten Informationen werden an den Zug übertragen;
Schritt S102: wenn das übergebende V-RBC bestimmt, dass eine von dem Zug gemeldete Position an einer Position einer Vorankündigungsbalise liegt und die Fahrterlaubnis des Zugs eine Übergabegrenze überschritten hat, werden eine Entfernung und eine IP-Adresse des empfangenden V-RBC an den Zug übertragen;
Schritt S103: Kommunikation wird mit dem empfangenden V-RBC aufgebaut, und der Zug registriert sich bei dem empfangenden V-RBC und überträgt Parameterinformationen;
Schritt S104: der Zug fährt in das empfangende V-RBC ein, ein maximales Sicherheits-Frontende des Zugs verlässt das übergebende V-RBC, das übergebende V-RBC überträgt eine Benachrichtigungsnachricht an das empfangende V-RBC, und das empfangende V-RBC überträgt eine Übernahmenachricht an das übergebende V-RBC; und
Schritt S105: ein Gespräch mit einem vorherigen V-RBC wird beendet, und eine Kommunikationssitzung mit dem übergebenden V-RBC wird beendet, nachdem ein minimales sicheres Heckende des Zugs das übergebende V-RBC verlassen hat.

6. Verfahren zum Umschalten eines virtuellen Zugbildungs-Radio-Block-Centers für eine Schwerlastbahn nach Anspruch 5, wobei die Informationen innerhalb des Zuständigkeitsbereichs des empfangenden V-RBC in Schritt S101 einen Streckenzustand, einen Gleiszustand und eine temporäre Geschwindigkeitsbeschränkung umfassen.

7. Verfahren zum Umschalten eines virtuellen Zugbildungs-Radio-Block-Centers für eine Schwerlastbahn nach Anspruch 1, wobei der Prozess, dass 2) der gebildete Zug und der nicht gebildete Zug das Überwachungsrecht des nicht gebildeten Zugs von einem V-RBC auf ein benachbartes V-RBC in dem fahrzeugseitig geführten Berechtigungsübertragungsmodus übertragen, im Einzelnen umfasst:
Schritt S201: Kommunikation wird mit dem empfangenden V-RBC aufgebaut, und Kommunikation mit dem empfangenden V-RBC wird aufgebaut, nachdem ein vollständig überwachter Zug in ein Mitverwaltungsintervall einfährt;
Schritt S202: die Fahrterlaubnis erstreckt sich zu einer empfangenden Partei; das übergebende V-RBC integriert Intervallzuginformationen, Informationen über verdeckte Züge und Zugbildungsinformationen, die von dem empfangenden V-RBC übertragen werden, und berechnet eine Erweiterung der Fahrterlaubnis für den Zug von einer übergebenden Partei zu der empfangenden Partei, die bis zu einem vorausliegenden Einfahrsignal reicht, wo Kommunikation mit dem empfangenden V-RBC aufgebaut wird; und nachdem der vollständig überwachte Zug in das Mitverwaltungsintervall einfährt, wird die Kommunikation mit dem empfangenden V-RBC aufgebaut;
Schritt S203: das empfangende V-RBC übernimmt, und nachdem der Zug in die empfangende Partei einfährt, stoppt das übergebende V-RBC die Berechnung der Fahrterlaubnis für den Zug, die getrennt durch die empfangende Partei berechnet wird und sich über das vorausliegende Einfahrsignal hinaus erstreckt; und
Schritt S204: die Kommunikation mit dem übergebenden V-RBC wird getrennt; und nachdem der Zug in die empfangende Partei einfährt, wird die Kommunikation mit der übergebenden Partei, um der übergebenden Partei die Berechnung der Fahrterlaubnis für einen nachfolgenden Zug zu erleichtern, vorübergehend nicht getrennt und dann getrennt, nachdem der Zug in die Station eingefahren ist.

8. Verfahren zum Umschalten eines virtuellen Zugbildungs-Radio-Block-Centers für eine Schwerlastbahn nach Anspruch 1, wobei der Prozess, dass 3) der gebildete Zug das Überwachungsrecht des nicht gebildeten Zugs von einem V-RBC auf ein benachbartes V-RBC in dem V-RBC-geführten Berechtigungsübertragungsmodus überträgt, im Einzelnen ist:
Schritt S301: wenn ein Endpunkt der Fahrterlaubnis des gebildeten Zugs eine V-RBC-Umschaltgrenze erreicht, überträgt das übergebende V-RBC Vorankündigungsinformationen des übergebenden Zugs an das empfangende V-RBC und beantragt Routeninformationen; wenn das übergebende V-RBC die von dem empfangenden V-RBC bereitgestellten Routeninformationen erhält, überträgt das übergebende V-RBC die Fahrterlaubnis, die sich bis zu einem Bereich des empfangenden V-RBC erstreckt, an den gebildeten Zug;
Schritt S2: wenn der gebildete Zug nahe an die V-RBC-Umschaltgrenze heranfährt, überträgt das übergebende V-RBC einen V-RBC-Umschaltbefehl an den virtuell gebildeten Zug; und wenn ein fahrzeugseitiges Kommunikationsfunkgerät normal ist, wird eine Kommunikationsverbindung mit dem empfangenden V-RBC aufgebaut;
Schritt S3: wenn ein maximales Sicherheits-Frontende eines Heckfahrzeugs des gebildeten Zugs einen V-RBC-Umschaltpunkt überschreitet, überträgt das empfangende V-RBC Zugübernahmeinformationen an das übergebende V-RBC; und wenn der virtuell gebildete Zug ordnungsgemäß sowohl mit dem übergebenden V-RBC als auch mit dem empfangenden V-RBC verbunden ist, werden nur die Fahrterlaubnisinformationen des empfangenden V-RBC verwendet; und
Schritt S4: wenn ein minimales Sicherheits-Heckende des Heckfahrzeugs des gebildeten Zugs eine V-RBC-Umschaltbalisengruppe überschreitet, wird die Kommunikationsverbindung zwischen dem Fahrzeuggerät und dem übergebenden V-RBC beendet; und wenn das Fahrzeuggerät vor der Übertragung nur mit dem übergebenden V-RBC verbunden ist, startet das Fahrzeuggerät die Verbindung mit dem empfangenden V-RBC neu, und schließt die Zugregistrierung ab und beantragt die Fahrterlaubnis.

9. Elektronische Vorrichtung, umfassend einen Prozessor und einen Speicher, auf dem ein Computerprogramm gespeichert ist, wobei der Prozessor, wenn er das Programm ausführt, das Verfahren nach einem der Ansprüche 1 bis 8 implementiert.

10. Computerlesbares Speichermedium, auf dem ein Computerprogramm gespeichert ist, wobei das Programm, wenn es von einem Prozessor ausgeführt wird, das Verfahren nach einem der Ansprüche 1 bis 8 implementiert.

## Revendications

1. Procédé de commutation d'un centre de bloc radio de formation virtuelle pour un chemin de fer lourd, dans lequel le procédé conçoit deux modes de transfert d'autorité piloté par un centre de bloc radio de formation virtuelle V-RBC et de transfert d'autorité piloté par le bord pour un train non formé et un train formé respectivement, et le procédé de commutation comprend :
1) le train non formé transfère un droit de surveillance du train non formé d'un V-RBC à un V-RBC adjacent dans le mode de transfert d'autorité piloté par le V-RBC ;
2) le train formé et le train non formé transfèrent le droit de surveillance du train non formé d'un V-RBC à un V-RBC adjacent dans le mode de transfert d'autorité piloté par le bord ; et
3) le train formé transfère le droit de surveillance du train non formé d'un V-RBC à un V-RBC adjacent dans le mode de transfert d'autorité piloté par le V-RBC.

2. Procédé de commutation d'un centre de bloc radio de formation virtuelle pour un chemin de fer lourd selon la revendication 1, dans lequel le mode de transfert d'autorité piloté par le V-RBC est adopté dans un long intervalle de transfert avec une bonne qualité de communication ; et le mode de transfert d'autorité piloté par le bord est adopté dans un court intervalle de transfert avec une communication instable.

3. Procédé de commutation d'un centre de bloc radio de formation virtuelle pour un chemin de fer lourd selon la revendication 1, dans lequel, dans le mode de transfert d'autorité piloté par le V-RBC, l'enregistrement d'un train et le calcul d'une autorisation de mouvement sont gérés indépendamment dans un V-RBC transférant et un V-RBC recevant avec une balise d'exécution comme frontière.

4. Procédé de commutation d'un centre de bloc radio de formation virtuelle pour un chemin de fer lourd selon la revendication 1, dans lequel, dans le mode de transfert d'autorité piloté par le bord, un train établit une communication avec les deux V-RBC afin de gérer séparément la formation et l'autorité.

5. Procédé de commutation d'un centre de bloc radio de formation virtuelle pour un chemin de fer lourd selon la revendication 1, dans lequel le processus selon lequel 1) le train non formé transfère un droit de surveillance du train non formé d'un V-RBC à un V-RBC adjacent dans le mode de transfert d'autorité piloté par le V-RBC comprend spécifiquement :
étape S101 : lorsque l'autorisation de mouvement d'un train de communication s'étend à une plage de juridiction d'un V-RBC recevant, un V-RBC transférant intègre des informations dans la plage de juridiction du V-RBC recevant dans l'autorisation de mouvement d'un train transférant, et les informations intégrées sont transmises au train ;
étape S102 : lorsque le V-RBC transférant détermine qu'un emplacement rapporté par le train est à un emplacement d'une balise de préavis, et que l'autorisation de mouvement du train a franchi une frontière de transfert, une distance et une adresse IP du V-RBC recevant sont transmises au train ;
étape S103 : une communication est établie avec le V-RBC recevant, et le train s'enregistre auprès du V-RBC recevant et transmet des informations de paramètres ;
étape S104 : le train circule dans le V-RBC recevant, une extrémité avant de sécurité maximale du train quitte le V-RBC transférant, le V-RBC transférant transmet un message de notification au V-RBC recevant, et le V-RBC recevant transmet un message de prise en charge au V-RBC transférant ; et
étape S105 : une conversation avec un V-RBC précédent est terminée, et une session de communication avec le V-RBC transférant est terminée après qu'une extrémité arrière de sécurité minimale du train a quitté le V-RBC transférant.

6. Procédé de commutation d'un centre de bloc radio de formation virtuelle pour un chemin de fer lourd selon la revendication 5, dans lequel les informations dans la plage de juridiction du V-RBC recevant à l'étape S101 comprennent une condition d'itinéraire, une condition de voie et une restriction temporaire de vitesse.

7. Procédé de commutation d'un centre de bloc radio de formation virtuelle pour un chemin de fer lourd selon la revendication 1, dans lequel le processus selon lequel 2) le train formé et le train non formé transfèrent le droit de surveillance du train non formé d'un V-RBC à un V-RBC adjacent dans le mode de transfert d'autorité piloté par le bord comprend spécifiquement :
étape S201 : une communication est établie avec le V-RBC recevant, et une communication avec le V-RBC recevant est établie après qu'un train entièrement surveillé circule dans un intervalle de cogestion ;
étape S202 : l'autorisation de mouvement s'étend à une partie réceptrice ; le V-RBC transférant intègre des informations de train d'intervalle, des informations de train caché et des informations de formation transmises par le V-RBC recevant, et calcule une extension de l'autorisation de mouvement pour le train depuis une partie transférante vers la partie réceptrice, atteignant jusqu'à un signal d'entrée en aval où une communication avec le V-RBC recevant est établie ; et après que le train entièrement surveillé circule dans l'intervalle de cogestion, la communication avec le V-RBC recevant est établie ;
étape S203 : le V-RBC recevant prend en charge, et après que le train circule dans la partie réceptrice, le V-RBC transférant arrête de calculer l'autorisation de mouvement pour le train, laquelle est calculée séparément par la partie réceptrice et s'étend au-delà du signal d'entrée en aval ; et
étape S204 : la communication avec le V-RBC transférant est déconnectée ; et après que le train circule dans la partie réceptrice, afin de faciliter le calcul par la partie transférante de l'autorisation de mouvement pour un train suivant, la communication avec la partie transférante n'est pas déconnectée temporairement puis est déconnectée après que le train circule dans la station.

8. Procédé de commutation d'un centre de bloc radio de formation virtuelle pour un chemin de fer lourd selon la revendication 1, dans lequel le processus selon lequel 3) le train formé transfère le droit de surveillance du train non formé d'un V-RBC à un V-RBC adjacent dans le mode de transfert d'autorité piloté par le V-RBC est spécifiquement :
étape S301 : lorsqu'un point d'extrémité de l'autorisation de mouvement du train formé atteint une frontière de commutation V-RBC, le V-RBC transférant transmet des informations de préavis de train transférant au V-RBC recevant et demande des informations d'itinéraire ; lorsque le V-RBC transférant obtient les informations d'itinéraire fournies par le V-RBC recevant, le V-RBC transférant transmet au train formé l'autorisation de mouvement s'étendant jusqu'à une zone du V-RBC recevant ;
étape S2 : lorsque le train formé circule à proximité de la frontière de commutation V-RBC, le V-RBC transférant transmet une commande de commutation V-RBC au train formé virtuel ; et si une radio de communication embarquée est normale, une connexion de communication est établie avec le V-RBC recevant ;
étape S3 : lorsqu'une extrémité avant de sécurité maximale d'un véhicule de queue du train formé franchit un point de commutation V-RBC, le V-RBC recevant transmet des informations de prise en charge du train au V-RBC transférant ; et si le train formé virtuel est correctement connecté à la fois au V-RBC transférant et au V-RBC recevant, seules les informations d'autorisation de mouvement du V-RBC recevant sont utilisées ; et
étape S4 : lorsqu'une extrémité arrière de sécurité minimale du véhicule de queue du train formé franchit un groupe de balises de commutation V-RBC, la connexion de communication entre le dispositif embarqué et le V-RBC transférant est terminée ; et si le dispositif embarqué n'est connecté qu'au V-RBC transférant avant le transfert, le dispositif embarqué redémarre la connexion avec le V-RBC recevant, et achève l'enregistrement du train et demande l'autorisation de mouvement.

9. Dispositif électronique, comprenant un processeur et une mémoire sur laquelle un programme informatique est stocké, dans lequel le processeur, lorsqu'il exécute le programme, met en œuvre le procédé selon l'une quelconque des revendications 1 à 8.

10. Support de stockage lisible par ordinateur sur lequel un programme informatique est stocké, dans lequel le programme, lorsqu'il est exécuté par un processeur, met en œuvre le procédé selon l'une quelconque des revendications 1 à 8.
